# EUROPÄISCHE PATENTANMELDUNG

(11) **EP 4 821 677 A1**
(43) Veröffentlichungstag der Anmeldung: **14.10.2026**
(21) Anmeldenummer: 25169591.2
(22) Anmeldetag: 09.04.2025
(51) Int. Cl.: B32B 7/02, B32B 5/02, B32B 5/30, B32B 27/06, B32B 27/12, B32B 27/20

(54) **VERFAHREN ZUR HERSTELLUNG EINER AKUSTISCH WIRKSAMEN VERBUNDPLATTE, AKUSTISCH WIRKSAME VERBUNDPLATTE**

(71) Anmelder: STO SE & Co. KGaA, 79780 Stühlingen (DE)
(72) Erfinder: Blaskovich, Samuel, 89537 Giengen (DE); Franz, Dirk, 66135 Saarbrücken (DE)
(74) Vertreter: Gottschalk, Matthias

(57) **Zusammenfassung**

Die Erfindung betrifft ein Verfahren zur Herstellung einer akustisch wirksamen Verbundplatte (10) für den Innenausbau, umfassend eine schallabsorbierende Leichtbauplatte (1) und eine strömungsdichte Lage (2). Erfindungsgemäß wird zwischen der schallabsorbierenden Leichtbauplatte (1) und der strömungsdichten Lage (2) eine strömungsoffene Lage (3) zur Entkopplung, insbesondere Schallentkopplung, der strömungsdichten Lage (2) von der schallabsorbierenden Leichtbauplatte (1) ausgebildet.

Ferner betrifft die Erfindung eine akustisch wirksame Verbundplatte (10), die insbesondere nach einem erfindungsgemäßen Verfahren herstellbar ist.

## Beschreibung

Die Erfindung betrifft ein Verfahren zur Herstellung einer akustisch wirksamen Verbundplatte für den Innenausbau. Eine solche Verbundplatte wird auch als Akustikplatte bezeichnet. Darüber hinaus betrifft die Erfindung eine akustisch wirksame Verbundplatte für den Innenausbau, die insbesondere nach einem erfindungsgemäßen Verfahren herstellbar ist.

### Stand der Technik

Aus dem Stand der Technik sind akustisch wirksame Verbundplatten bekannt, die eine schallabsorbierende Leichtbauplatte aus offenporigen Leichtfüllstoffen umfassen. Tritt eine Schallwelle in eine Pore des Leichtfüllstoffs ein, entsteht Reibung, welche die kinetische Energie der Schallwelle in Wärme umwandelt. Die Schallwelle wird auf diese Weise absorbiert. Voraussetzung für die Schallabsorption ist demnach eine gewisse Strömungsoffenheit der Leichtbauplatte. "Strömungsoffen" heißt, dass die Leichtbauplatte durchlässig für Luft ist.

Da die Luft in Innenräumen in der Regel Staubpartikel enthält, wirkt eine in einem Innenraum verbaute strömungsoffene Leichtbauplatte wie ein Filter, der die in der Luft enthaltenen Staubpartikel abfängt. Dies führt über die Zeit zu einer sich auf der Plattenoberfläche abzeichnenden Verschmutzung der Leichtbauplatte.

Um dies zu vermeiden, kann auf die Rückseite der strömungsoffenen Leichtbauplatte eine strömungsdichte, das heißt "nicht luftdurchlässige" Lage aufgebracht werden.

Diese wirkt wie eine Art Versiegelung, so dass die Verbundplatte aus strömungsoffener Leichtbauplatte und strömungsdichter Lage für Luft undurchlässig ist. Leider hat sich gezeigt, dass die rückseitige strömungsdichte Lage die akustische Wirksamkeit der Verbundplatte in nicht unerheblichem Maße mindert.

Die vorliegende Erfindung ist mit der Aufgabe befasst, die akustische Wirksamkeit einer Verbundplatte für den Innenausbau, umfassend eine schallabsorbierende Leichtbauplatte und eine strömungsdichte Lage, zu verbessern.

Zur Lösung der Aufgabe wird das Verfahren mit den Merkmalen des Anspruchs 1 vorgeschlagen. Darüber hinaus wird eine akustisch wirksame Verbundplatte angegeben. Vorteilhafte Weiterbildungen der Erfindung sind den jeweiligen Unteransprüchen zu entnehmen.

### Offenbarung der Erfindung

Vorgeschlagen wird ein Verfahren zur Herstellung einer akustisch wirksamen Verbundplatte für den Innenausbau, umfassend eine schallabsorbierende Leichtbauplatte und eine strömungsdichte Lage. Erfindungsgemäß wird zwischen der schallabsorbierenden Leichtbauplatte und der strömungsdichten Lage eine strömungsoffene Lage zur Entkopplung, insbesondere Schallentkopplung, der strömungsdichten Lage von der schallabsorbierenden Leichtbauplatte ausgebildet.

Eine nach dem Verfahren hergestellte Verbundplatte weist demnach mindestens drei Lagen auf, und zwar eine schallabsorbierende Leichtbauplatte als erste Lage, eine strömungsoffene Lage als zweite Lage und eine strömungsdichte Lage als dritte Lage.

Die durch die strömungsoffene Lage bewirkte Entkopplung der strömungsdichten Lage von der schallabsorbierenden Leichtbauplatte hat den Effekt, dass die eingangs beschriebenen Nachteile einer direkt mit der schallabsorbierenden Leichtbauplatte verklebten strömungsdichten Lage weitgehend aufgehoben werden. Das heißt, dass die erfindungsgemäße akustisch wirksame Verbundplatte einen ähnlich hohen Schallabsorptionsgrad aufweist wie die schallabsorbierende Leichtbauplatte allein, das heißt ohne strömungsoffene und strömungsdichte Lage.

Der Schallabsorptionsgrad α definiert das Verhältnis der absorbierten Schallintensität zur gesamten einfallenden Schallintensität. Der Schallabsorptionsgrad α hängt dabei wie folgt vom Schallreflexionsgrad ρ, dem Schalltransmissionsgrad τ und dem Schalldissipationsgrad δ ab: $ρ + α = 1$ $ρ + τ + δ = 1$ $α = τ + δ$

Die absorbierte Schallintensität bzw. der Schallabsorptionsgrad α entspricht demnach der Summe aus durchgelassener bzw. transmittierter und "verlorengegangener" bzw. dissipierter Schallintensität. Um einen hohen Schallabsorptionsgrad α zu erreichen, sollten demzufolge die Schalltransmission und die Schalldissipation möglichst hoch sein. Die Schallreflexion dagegen sollte möglichst gering sein.

Die negativen Wirkungen einer direkt mit einer schallabsorbierenden Leichtbauplatte verklebten strömungsdichten Lage sind auf einen erhöhten Schallreflexionsgrad zurückzuführen, da die strömungsdichte Lage eine schallreflektierende Ebene ausbildet. Wird die strömungsdichte Lage durch eine zwischenliegende strömungsoffene Lage jedoch von der schallabsorbierenden Leichtbauplatte entkoppelt, insbesondere schallentkoppelt, verringert sich der negative Einfluss, den die strömungsdichte Lage auf die schallabsorbierenden Eigenschaften der Leichtbauplatte und damit auf die akustische Wirksamkeit der Verbundplatte hat. Auf diese Weise wird eine Verbundplatte geschaffen, die weniger stark zu Verschmutzungen neigt und zugleich eine hohe akustische Wirksamkeit aufweist.

Dieser Effekt steigt, je "dicker" und/oder "weicher" die zwischen der Leichtbauplatte und der strömungsdichten Lage vermittelnde strömungsoffene Lage ist, da dann in entsprechender Weise der Schalldissipationsgrad δ steigt.

Vorteilhafterweise wird die vermittelnde strömungsoffene Lage vollflächig aufgebracht, vorzugsweise vollflächig verklebt. Dadurch ist sichergestellt, dass die strömungsdichte Lage vollflächig von der schallabsorbierenden Leichtbauplatte entkoppelt wird und es nicht zur Ausbildung von Schallbrücken kommt.

Ferner wird vorgeschlagen, dass zur Ausbildung der strömungsoffenen Lage ein Flächengebilde, insbesondere ein Vlies, Gewebe, Gewirke oder Gelege, verwendet wird, das
a) ein Flächengewicht nach DIN EN 12127 von 140 bis 500 g/m², vorzugsweise von 160 bis 480 g/m², weiterhin vorzugsweise von 180 bis 450 g/m², und/oder
b) einen spezifischen Strömungswiderstand nach DIN EN ISO 9053-1 kleiner 500 Pa*s/m, vorzugsweise kleiner 200 Pa*s/m, weiterhin vorzugsweise kleiner 100 Pa*s/m
aufweist.

Hieraus folgt, dass die strömungsoffene Lage vorzugsweise ein textiles Flächengebilde ist. Das Flächengewicht eines textilen Flächengebildes ist ein Anhaltspunkt für seine Dicke und seine Dichte. Je dicker oder dichter das textile Flächengebilde ist, desto höher ist das Flächengewicht.

Das Flächengewicht der strömungsoffenen Lage ist vergleichsweise hoch gewählt. Dies lässt darauf schließen, dass zur Ausbildung der strömungsoffenen Lage ein entsprechend dickes und/oder dichtes textiles Flächengebilde verwendet wird. Dem ferner angegebenen spezifischen Strömungswiderstand lässt sich jedoch entnehmen, dass die Dichte nicht besonders hoch ist, so dass das hohe Flächengewicht vorliegend vorrangig auf die Dicke des textilen Flächengebildes zurückzuführen ist. Mit der Dicke steigt die Dämpfungswirkung der strömungsoffenen Lage, so dass eine größere Dicke wünschenswert ist. Gleichzeitig gewährleistet eine geringe Dichte die geforderte Strömungsoffenheit des zur Ausbildung der strömungsoffenen Lage verwendeten textilen Flächengebildes.

Textile Flächengebilde in Form von Vliesen, Geweben, Gewirken oder Gelegen weisen in der Regel eine hohe Strömungsoffenheit und damit einen geringen spezifischen Strömungswiderstand auf. Denn üblicherweise werden diese Flächengebilde aus Fasern hergestellt, wobei zwischen den Fasern mehr oder weniger große Hohlräume verbleiben. Das Flächengebilde kann Glas-, Kunst- und/oder Naturfasern enthalten, wobei nicht brennbare Fasern, wie beispielsweise Glasfasern, bevorzugt eingesetzt werden, um den einschlägigen Brandschutzanforderungen zu genügen, die an die akustisch wirksame Verbundplatte gestellt werden. Die Fasern können rein mechanisch und/oder durch Zugabe eines Bindemittels miteinander verbunden sein.

Des Weiteren wird vorgeschlagen, dass die strömungsoffene Lage in einer Dicke d1 ausgebildet wird, die größer als eine Dicke d2 der strömungsdichten Lage ist. Wie bereits erwähnt, steigt mit der Dicke der strömungsoffenen Lage der Dämpfungseffekt. Dies gilt insbesondere, wenn die strömungsoffene Lage zugleich weniger dicht ist. Denn dies lässt darauf schließen, dass die strömungsoffene Lage eher "weich" eingestellt ist. Je größer der Dämpfungseffekt ist, desto größer ist auch der Effekt der durch die strömungsoffene Lage erzielten Entkopplung. Demzufolge steigt mit der Dicke der vermittelnden strömungsoffenen Lage die akustische Wirksamkeit der nach dem vorgeschlagenen Verfahren hergestellten Verbundplatte. Die strömungsdichte Lage dagegen kann vergleichsweise dünn ausgebildet sein, da diese lediglich eine Art Versiegelung ausbildet.

Die Dicke d1 der strömungsoffenen Lage nach DIN EN ISO 9073-2 beträgt vorzugsweise mindestens 1,5 mm, weiterhin vorzugsweise mindestens 1,7 mm, besonders bevorzugt mindestens 1,9 mm. Aus verarbeitungstechnischen Gründen sollte die Dicke d1 einen Maximalwert von 4,0 mm nicht überschreiten.

Die Dicke d2 der strömungsdichten Lage nach DIN EN ISO 9073-2 beträgt vorzugsweise 0,2 bis 1,2 mm, weiterhin vorzugsweise 0,3 bis 0,8 mm, besonders bevorzugt 0,4 bis 0,6 mm.

Zur Ausbildung der strömungsdichten Lage wird bevorzugt ein Flächengebilde verwendet, das
a) ein Flächengewicht nach DIN EN 12127 von 200 bis 600 g/m², vorzugsweise von 220 bis 500 g/m², weiterhin vorzugsweise von 240 bis 450 g/m², und/oder
b) einen spezifischen Strömungswiderstand nach DIN EN ISO 9053-1 über 1000 Pa*s/m, vorzugsweise über 2000 Pa*s/m, weiterhin vorzugsweise über 5000 Pa*s/m
aufweist.

Das Flächengewicht der strömungsdichten Lage kann demnach dem Flächengewicht der strömungsoffenen Lage entsprechen. Um strömungsoffen bzw. strömungsdicht zu sein, müssen beide Lagen jedoch unterschiedliche Dichten aufweisen.

Der spezifische Strömungswiderstand des Flächengebildes zur Ausbildung der strömungsdichten Lage liegt deutlich über dem der vermittelnden strömungsoffenen Lage. Aufgrund des gewählten hohen spezifischen Strömungswiderstands kann die strömungsdichte Lage als luft- bzw. winddicht bezeichnet werden. Dadurch ist sichergestellt, dass die strömungsdichte Lage die Funktion einer Versiegelung übernehmen kann. Aufgrund der hohen Dichte kann wiederum die Dicke vergleichsweise dünn gewählt werden, um auf das angegebene Flächengewicht zu kommen.

Bei der Durchführung des vorgeschlagenen Verfahrens können die strömungsoffene Lage und die strömungsdichte Lage im Verbund oder nacheinander auf die schallabsorbierende Leichtbauplatte aufgebracht, vorzugsweise aufgeklebt oder auflaminiert, werden. Im erstgenannten Fall werden zunächst die strömungsoffene Lage und die strömungsdichte Lage verbunden und dann gemeinsam bzw. im Verbund auf die schallabsorbierende Leichtbauplatte aufgebracht. Das Aufbringen der strömungsoffenen Lage und der strömungsdichten Lage erfolgt dann in einem Arbeitsschritt nach der Herstellung der schallabsorbierenden Leichtbauplatte. Alternativ können die strömungsoffene Lage und die strömungsdichte Lage nach der Herstellung der schallabsorbierenden Leichtbauplatte auch nacheinander auf diese aufgebracht werden. Das Aufkleben oder Auflaminieren der Lagen besitzt den Vorteil, dass ein vollflächiger Verbund und damit eine gute Haftung zwischen den einzelnen Lagen der Verbundplatte erzielbar ist.

Abweichend von der vorstehend beschriebenen Ausführungsform können die strömungsoffene Lage und die strömungsdichte Lage bereits bei der Herstellung der schallabsorbierenden Leichtbauplatte mit dieser verbunden, vorzugsweise verpresst, werden. Auf diese Weise kann mindestens ein weiterer Arbeitsschritt eingespart werden. Beispielsweise kann die schallabsorbierende Leichtbauplatte aus einer Zusammensetzung hergestellt werden, die in eine Form eingebracht und in der Form verpresst wird. Die Flächengebilde zur Ausbildung der strömungsoffenen und der strömungsdichten Lage können dann mit in die Form eingegeben und zusammen mit der Zusammensetzung verpresst werden. Das Verpressen kann unter Zugabe von Wärme erfolgen, um den Verbund und die Haftung zwischen den Lagen der Verbundplatte zu verbessern.

In Weiterbildung der Erfindung wird vorgeschlagen, dass die schallabsorbierende Leichtbauplatte aus einer Zusammensetzung hergestellt wird, die mindestens einen Leichtfüllstoff und mindestens ein organisches Polymerbindemittel enthält. Ein Leichtfüllstoff bildet in der Regel offene Poren bzw. Zellen aus, in denen sich Schallwellen verfangen können, so dass ihre kinetische Energie in Wärme umgewandelt wird und eine Schallabsorption erzielt wird. Bei dem mindestens einen offenporigen bzw. offenzelligen Leichtfüllstoff kann es sich insbesondere um Blähglas, Blähton, Blähschiefer, geschäumtes Blähglas, Blähglasgranulat, Blähperlite, Blähglimmer, insbesondere geblähtes oder geschäumtes Vermiculit, Hohlglaskugeln, Hohlkeramikkugeln, Lavaschlacke, Tuff und/oder Bims handeln.

Das in der Zusammensetzung enthaltene organische Polymerbindemittel trägt dazu bei, dass eine aus der Zusammensetzung hergestellte Leichtbauplatte eine gewisse Elastizität aufweist. Diese fördert einen hohen Schallabsorptionsgrad und verbessert zudem das Bruchverhalten der Leichtbauplatte. Bei dem mindestens einen organischen Polymerbindemittel kann es sich insbesondere um ein organisches Polymerbindemittel auf Basis von Vinylacetat/Ethylen-Copolymeren, ein Copolymer auf Basis von Vinylaromaten, insbesondere Styrol, und Acrylaten und/oder ein Copolymer auf Basis von Reinacrylaten handeln. Bevorzugt wird ein Copolymer aus Vinylacetat und Ethylen als organisches Polymerbindemittel eingesetzt. Besonders bevorzugt wird ein organisches Polymerbindemittel auf Epoxidharzbasis mit einem geeigneten Härter verwendet. Bei einem organischen Polymerbindemittel auf Epoxidharzbasis handelt es sich um ein reaktives Bindemittel, das heißt es trocknet nicht, sondern es härtet aus. Das Aushärten erfolgt schneller und kontrollierbarer, was u.a. zu kürzeren Taktzeiten führt. Zudem ergeben organische Polymerbindemittel auf Epoxidharzbasis mechanisch stabile Platten bei zugleich geringem Materialeinsatz, da sie eine hohe Bindekraft aufweisen.

Gemäß einer bevorzugten Ausführungsform der Erfindung wird die schallabsorbierende Leichtbauplatte aus einer Zusammensetzung hergestellt, die eine Leichtfüllstoffkombination aus Leichtfüllstoffen unterschiedlicher Partikelgrößenfraktionen enthält. Die Verwendung von Leichtfüllstoffen unterschiedlicher Partikelgrößenfraktionen führt zu einer hohen Packungsdichte der Leichtfülle und damit zu kleinen Zwickelräumen bzw. Haufwerksporen, die zwischen den einzelnen Leichtfüllstoffpartikeln verbleiben. Es hat sich gezeigt, dass kleine Haufwerksporen zwischen den Leichtfüllstoffpartikeln einen positiven Einfluss auf das Schallabsorptionsverhalten der Leichtbauplatte haben, insbesondere kann die Schallabsorption bei besonders hohen sowie tiefen Frequenzen verbessert werden, so dass ein sehr breiter Frequenzbereich, beispielsweise ein Frequenzbereich von 125 bis 5000 Hz, abgedeckt wird. Darüber hinaus wird erreicht, dass die Absorption über den gesamten Frequenzbereich geleichmäßiger verläuft. Das heißt, dass eine Glättung der Absorptionskurve erzielt wird, so dass diese weniger steil verläuft.

Bevorzugt enthält die Leichtfüllstoffkombination der Zusammensetzung mindestens drei Partikelgrößenfraktionen, umfassend
- eine erste Fraktion A mit einer Partikelgröße nach DIN EN 933-1 von 0,8-2,5 mm, vorzugsweise von 0,9-2,2 mm, weiterhin vorzugsweise von 1,0-2,0 mm,
- eine zweite Fraktion B mit einer Partikelgröße nach DIN EN 933-1 von 0,28-1,6 mm, vorzugsweise von 0,4-1,25 mm, weiterhin vorzugsweise von 0,5-1,0 mm, und
- eine dritte Fraktion C mit einer Partikelgröße nach DIN EN 933-1 von 0,1-0,8 mm, vorzugsweise von 0,2-0,63 mm, weiterhin vorzugsweise von 0,25-0,5 mm.

Das heißt, dass die Leichtfüllstoffe in der Zusammensetzung in zumindest trimodaler Partikelgrößenverteilung vorliegen. Dabei bildet mindestens eine Fraktion, vorliegend die Fraktion C, eine Feinfraktion aus. Die Leichtfüllstoffpartikel der Feinfraktion sind in der Lage, die Zwickelräume zu besetzen, die zwischen den Leichtfüllstoffpartikeln der beiden anderen Fraktionen verbleiben. Dadurch verringert sich die Größe der verbleibenden Haufwerksporen, zugleich steigt die Anzahl der Haufwerksporen. Beides hat positive Auswirkungen auf das Schallabsorptionsverhalten der Leichtbauplatte. Die in der Zusammensetzung enthaltene Feinfraktion bzw. Fraktion C erhöht zudem die Masse der Leichtbauplatte, was sich insbesondere positiv auf die Schallabsorption tiefer Frequenzen auswirkt.

Die Partikelgrößenfraktionen der in der Zusammensetzung enthaltenen Leichtfüllstoffkombination können einen sich überschneidenden Bereich aufweisen. Ist dies der Fall, ist vorzugsweise der Überschneidungsbereich kleiner als der Bereich, der jeweils außerhalb des Überschneidungsbereichs liegt.

Ferner wird vorgeschlagen, dass die Partikelgröße nach DIN EN 933-1 einer Fraktion um mindestens den Faktor 0,5 kleiner als die der nächstgröberen Fraktion ist. Das heißt, dass die Partikelgröße der Fraktion C um mindestens den Faktor 0,5 kleiner als die Partikelgröße der Fraktion B ist und die Partikelgröße der Fraktion B mindestens um den Faktor 0,5 kleiner als die Partikelgröße der Fraktion A ist. Durch diese Maßnahme wird ein deutlicher Partikelgrößenunterschied zwischen den Fraktionen erzielt, der sicherstellt, dass die jeweils feineren Leichtfüllstoffpartikel die Zwickelräume zwischen den jeweils gröberen Leichtfüllstoffpartikeln besetzen können.

Bevorzugt wird die schallabsorbierende Leichtbauplatte aus einer Zusammensetzung hergestellt, die
- 30-60 Gew.-%, vorzugsweise 32-56 Gew.-%, weiterhin vorzugsweise 34-50 Gew.-% Leichtfüllstoffe der ersten Fraktion A,
- 20-50 Gew.-%, vorzugsweise 24-45 Gew.-%, weiterhin vorzugsweise 26-40 Gew.-% der zweiten Fraktion B und
- 4-16 Gew.-%, vorzugsweise 6-14 Gew.-%, weiterhin vorzugsweise 8-12 Gew.-% der dritten Fraktion C
jeweils bezogen auf das Gesamtgewicht der Ausgangsstoffe der Zusammensetzung enthält.

Der Anteil des enthaltenen organischen Bindemittels beträgt vorzugsweise 4,0-12,0 Gew.-%, weiterhin vorzugsweise 6,0-11,0 Gew.-%, besonders bevorzugt 8,0-10,0 Gew.-% bezogen auf das Gesamtgewicht der Ausgangsstoffe der Zusammensetzung.

Ferner bevorzugt wird die schallabsorbierende Leichtbauplatte aus einer Zusammensetzung hergestellt, die ein Hydrophobierungsmittel, beispielsweise aus der Gruppe der Silikonharze, Polysiloxane, Fettsäuren, Fettsäurederivate, Wachse und/oder Paraffine, enthält. Das Hydrophobierungsmittel verringert die Neigung der Leichtfüllstoffpartikel, Wasser aufzunehmen und in den Poren einzulagern. Dadurch kann die Feuchtigkeit der Leichtfüllstoffpartikel reduziert werden, wodurch gleichzeitig das Rücktrocknen gefördert wird. Der Anteil des enthaltenen Hydrophobierungsmittels beträgt vorzugsweise 0,01-4,0 Gew.-% bezogen auf das Gesamtgewicht der Ausgangsstoffe der Zusammensetzung. Bevorzugt sind 0,05-3,0 Gew.-%, besonders bevorzugt 0,1-2,0 Gew.-% eines Hydrophobierungsmittels, insbesondere eines Hydrophobierungsmittels auf Siloxan-Basis, bezogen auf das Gesamtgewicht der Ausgangsstoffe in der Zusammensetzung enthalten.

Vorteilhafterweise wird die schallabsorbierende Leichtbauplatte ein- oder beidseitig kaschiert. Die Kaschierung verbessert die Haptik und damit die Verarbeitungsfreundlichkeit der Leichtbauplatte. Ferner kann die Kaschierung als Haftgrund für weitere aufzubringende Lagen und/oder Schichten dienen. Des Weiteren führt die Kaschierung zu einer gewissen Armierung der Leichtbauplatte, so dass die Gesamtstabilität der Leichtbauplatte verbessert wird.

Darüber hinaus betrifft die Erfindung eine akustisch wirksame Verbundplatte für den Innenausbau, umfassend eine schallabsorbierende Leichtbauplatte und eine strömungsdichte Lage. Erfindungsgemäß ist zwischen der schallabsorbierenden Leichtbauplatte und der strömungsdichten Lage eine strömungsoffene Lage zur Entkopplung, insbesondere Schallentkopplung, der strömungsdichten Lage von der schallabsorbierenden Leichtbauplatte angeordnet.

Die vorgeschlagene akustisch wirksame Verbundplatte weist den Vorteil auf, dass sie aufgrund der strömungsdichten Lage weniger zu Verschmutzungen neigt. Zugleich wird durch die strömungsoffene Lage eine Entkopplung der strömungsdichten Lage von der schallabsorbierenden Leichtbauplatte bewirkt, wodurch der negative Einfluss der strömungsdichten Lage auf die akustische Wirksamkeit der Verbundplatte minimiert wird. Die vorgeschlagene Verbundplatte weist daher eine hohe akustische Wirksamkeit auf.

Bevorzugt ist die zwischen der schallabsorbierenden Leichtbauplatte und der strömungsdichten Lage angeordnete strömungsoffene Lage vollflächig auf die schallabsorbierende Leichtbauplatte aufgebracht. Auf diese Weise ist über die strömungsoffene Lage eine vollflächige bzw. vollständige Entkopplung der strömungsdichten Lage von der schallabsorbierenden Leichtbauplatte sichergestellt.

Die vorgeschlagene akustisch wirksame Verbundplatte kann insbesondere nach dem zuvor beschriebenen erfindungsgemäßen Verfahren hergestellt werden, so dass die gleichen zuvor beschriebenen Vorteile erzielt werden. Insoweit wird daher auf die in Zusammenhang mit dem Verfahren genannten Vorteile verwiesen.

Gemäß einer bevorzugten Ausführungsform der Erfindung ist die strömungsoffene Lage aus einem Flächengebilde, insbesondere einem Vlies, Gewebe, Gewirke oder Gelege, ausgebildet, das
a) ein Flächengewicht nach DIN EN 12127 von 140 bis 500 g/m², vorzugsweise von 160 bis 480 g/m², weiterhin vorzugsweise von 180 bis 450 g/m², und/oder
b) einen spezifischen Strömungswiderstand nach DIN EN ISO 9053-1 kleiner 500 Pa*s/m, vorzugsweise kleiner 200 Pa*s/m, weiterhin vorzugsweise kleiner 100 Pa*s/m
aufweist.

Das angegebene Flächengewicht lässt darauf schließen, wie dick und/oder wie dicht das Flächengebilde ist. Da vorliegend eine geringe Dichte gefordert ist, damit die Strömungsoffenheit gewährleistet ist, weist das angegebene Flächengewicht auf eine vergleichsweise dicke strömungsoffene Lage hin. Über die strömungsoffene Lage lässt sich somit eine hohe Dämpfungswirkung erzielen, die zu einer effektiven Entkopplung der strömungsdichten Lage von der schallabsorbierenden Leichtbauplatte führt.

Der angegebene spezifische Strömungswiderstand ist ein Parameter für die Strömungsoffenheit der Lage und belegt, dass die Lage strömungsoffen bzw. für Luft durchlässig ist.

Des Weiteren wird vorgeschlagen, dass die strömungsdichte Lage aus einem Flächengebilde ausgebildet ist, das
a) ein Flächengewicht nach DIN EN 12127 von 200 bis 600 g/m², vorzugsweise von 220 bis 500 g/m², weiterhin vorzugsweise von 240 bis 450 g/m², und/oder
b) einen spezifischen Strömungswiderstand nach DIN EN ISO 9053-1 über 1000 Pa*s/m, vorzugsweise über 2000 Pa*s/m, weiterhin vorzugsweise über 5000 Pa*s/m
aufweist.

Das Flächengewicht der strömungsdichten Lage kann demnach dem Flächengewicht der strömungsoffenen Lage entsprechen, gleichwohl beide Lagen unterschiedliche Aufgaben zu erfüllen haben. Dies ist dadurch gewährleistet, dass sie sich - bei gleichem oder ähnlichem Flächengewicht - hinsichtlich ihrer Dichten unterscheiden. Verdeutlicht wird dies durch die unterschiedlich hohen spezifischen Strömungswiderstände, der bei der strömungsdichten Lage sehr viel höher als bei der strömungsoffenen Lage ist.

Der angegebene sehr hohe spezifische Strömungswiderstand weist die strömungsdichte Lage als luftdicht aus. Das heißt, dass keine staubhaltige Luft die Verbundplatte durchdringen kann, was zu der geringen Verschmutzungsneigung der Verbundplatte führt.

Bevorzugt weist die strömungsoffene Lage eine Dicke d1 auf, die größer als eine Dicke d2 der strömungsdichten Lage ist. Da die strömungsoffene Lage nicht nur eine Entkopplung bewirkt, sondern auch zur Schallabsorption beiträgt, steigt mit der Dicke der strömungsoffenen Lage die Dämpfungswirkung und damit die akustische Wirksamkeit der Verbundplatte. Dies gilt insbesondere, wenn die strömungsoffene Lage zugleich eher "weich" ist. Die strömungsdichte Lage dagegen dient lediglich der Versiegelung der Verbundplatte und kann demzufolge vergleichsweise dünn ausgeführt sein.

Vorzugsweise beträgt die Dicke d1 der strömungsoffenen Lage nach DIN EN ISO 9073-2 mindestens 1,5 mm, weiterhin vorzugsweise mindestens 1,7 mm, besonders bevorzugt mindestens 1,9 mm. Aus verarbeitungstechnischen Gründen beträgt die Dicke d1 maximal 4,0 mm.

Die Dicke d2 der strömungsdichten Lage nach DIN EN ISO 9073-2 beträgt vorzugsweise 0,2 bis 1,2 mm, weiterhin vorzugsweise 0,3 bis 0,8 mm, besonders bevorzugt 0,4 bis 0,6 mm.

Ferner bevorzugt weist die schallabsorbierende Leichtbauplatte eine Dicke d3 von 12 bis 35 mm, vorzugsweise von 16 bis 30 mm, weiterhin vorzugsweise von 18 bis 26 mm auf. Hierbei handelt es sich um gängige Dicken von Leichtbauplatten, so dass es sich bei der schallabsorbierenden Leichtbauplatte der vorgeschlagenen Verbundplatte um eine herkömmliche schallabsorbierende Leichtbauplatte handeln kann.

Gemäß einer bevorzugten Ausführungsform der Erfindung enthält die schallabsorbierende Leichtbauplatte der vorgeschlagenen Verbundplatte mindestens einen Leichtfüllstoff sowie mindestens ein organisches Polymerbindemittel. Das enthaltene organische Polymerbindemittel verleiht der Leichtbauplatte eine gewisse Elastizität. Diese fördert einen hohen Schallabsorptionsgrad und verbessert zudem das Bruchverhalten der Leichtbauplatte. Hinsichtlich geeigneter organischer Polymerbindemittel sowie geeigneter Leichtfüllstoffe wird auf die Beschreibung des erfindungsgemäßen Verfahrens verwiesen.

Besonders bevorzugt enthält die schallabsorbierende Leichtbauplatte eine Leichtfüllstoffkombination aus Leichtfüllstoffen unterschiedlicher Partikelgrößenfraktionen, da dies zu einer hohen Packungsdichte der Leichtfüllstoffe führt, so dass kleine Zwickelräume bzw. Haufwerksporen zwischen den einzelnen Leichtfüllstoffpartikeln verbleiben. Es hat sich gezeigt, dass kleine Zwickelräume bzw. Haufwerksporen den Frequenzbereich der Schallabsorption erweitern, so dass die Schallabsorption verbessert wird. Hinsichtlich der Partikelgrößenverteilung wird wiederum auf die Beschreibung des erfindungsgemäßen Verfahrens verwiesen.

Eine bevorzugte Ausführungsform einer erfindungsgemäßen akustisch wirksamen Verbundplatte, deren Herstellung und deren Vorteile werden nachfolgend anhand eines konkreten Ausführungsbeispiels sowie eines Referenzbeispiels näher beschrieben.

### Ausführungsbeispiel:

Zur Herstellung einer schallabsorbierenden Leichtbauplatte wurden

| | | |
|---|---|---|
| 40,0 | Gew.-% | Blähglas in einer Partikelgrößenfraktion (A) 1,0-2,0 mm |
| 33,0 | Gew.-% | Blähglas in einer Partikelgrößenfraktion (B) 0,5-1,0 mm |
| 10,0 | Gew.-& | Blähglas in einer Partikelgrößenfraktion (C) 0,25-0,5 mm |
| 8,0 | Gew.-% | Epoxidharz-Bindemittel und Amin-Härter |

| | | |
|---|---|---|
| 8,5 | Gew.-% | Aluminiumhydroxid als Feinstfüllstoff |
| 0,5 | Gew.-% | Additive, enthaltend ein Hydrophobierungsmittel |
| 100 | Gew.-% | |

homogen gemischt, in eine Form eingefüllt und in der Form unter Einwirkung von Druck und Wärme (150°C) zu einer Platte mit einer Plattenstärke von 25 mm verpresst.

Auf die schallabsorbierende Leichtbauplatte wurde einseitig ein 2 mm dickes Vlies mit einem spezifischen Strömungswiderstand < 50 Pa*s/m und einem Flächengewicht von 215 g/m² als strömungsoffene Lage aufgebracht, wobei das Vlies vollflächig mit der Leichtbauplatte verklebt wurde. Auf die strömungsoffene Lage folgte eine strömungsdichte Lage, wobei als strömungsdichte Lage ein 0,5 mm dickes Vlies mit einem spezifischen Strömungswiderstand > 20000 Pa*s/m und einem Flächengewicht von 300 g/m² verwendet wurde, das vollflächig mit der strömungsoffenen Lage verklebt wurde.

Die derart hergestellte akustisch wirksame Verbundplatte wies einen Schallabsorptionsgrad α bei 750 Hz von 0,72 auf. Dieser Wert wurde nach ISO 10534-2 im Impedanzrohr gemessen.

Vor dem Aufbringen der strömungsoffenen Lage und der strömungsdichten Lage wurde der Schallabsorptionsgrad α bei 750 Hz der schallabsorbierenden Leichtbauplatte nach ISO 10534-2 im Impedanzrohr gemessen. Diese Messung ergab einen Wert von 0,78. Das heißt, dass sich der Schallabsorptionsgrad α der schallabsorbierenden Leichtbauplatte durch das Aufbringen der weiteren Lagen kaum verschlechtert hat.

Als Referenz wurde eine weitere Verbundplatte nach dem zuvor beschriebenen Verfahren hergestellt, wobei jedoch auf die strömungsoffene Lage zwischen der schallabsorbierenden Leichtbauplatte und der strömungsdichten Lage verzichtet wurde. Stattdessen wurde die strömungsdichte Lage direkt vollflächig mit der schallabsorbierenden Leichtbauplatte verklebt. Anschließend wurde auch hier der Schallabsorptionsgrad α bei 750 Hz nach ISO 12534-2 im Impedanzrohr gemessen. Die Messung ergab einen Wert von 0,36.

Die Messungen zeigen, dass
- das direkte Verkleben der strömungsdichten Lage auf der schallabsorbierenden Leichtbauplatte erhebliche negative Auswirkungen auf die akustische Wirksamkeit der Verbundplatte hat, und
- die negativen Auswirkungen nahezu aufgehoben werden können, wenn zwischen der schallabsorbierenden Leichtbauplatte und der strömungsdichten Lage eine strömungsoffene Lage zur Entkopplung angeordnet wird.

Anhand der beigefügten Figuren werden weitere bevorzugte Ausführungsformen einer erfindungsgemäßen akustisch wirksamen Verbundplatte erläutert. Diese zeigen:
Fig. 1 einen Querschnitt durch eine erste erfindungsgemäße akustisch wirksame Verbundplatte und
Fig. 2 einen Querschnitt durch eine zweite erfindungsgemäße akustisch wirksame Verbundplatte.

### Ausführliche Beschreibung der Figuren

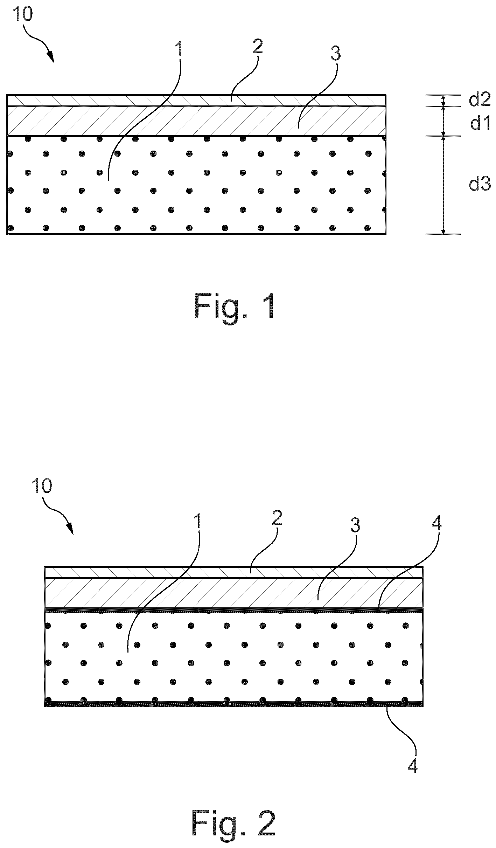

Der Figur 1 ist eine erste erfindungsgemäße akustisch wirksame Verbundplatte 10 gemäß einer bevorzugten Ausführungsform zu entnehmen. Die Verbundplatte 10 weist eine schallabsorbierende Leichtbauplatte 1 und eine strömungsdichte Lage 2 auf, wobei zwischen der schallabsorbierenden Leichtbauplatte 1 und der strömungsdichten Lage 2 eine strömungsoffene Lage 3 angeordnet ist. Die dargestellte Verbundplatte 10 weist demnach drei Lagen auf, wenn man die schallabsorbierende Leichtbauplatte 1 ebenfalls als Lage definiert.

Die zwischen der schallabsorbierenden Leichtbauplatte 1 und der strömungsdichten Lage 2 vermittelnde strömungsoffene Lage 3 weist eine Dicke d1 auf, die größer als eine Dicke d2 der strömungsdichten Lage 2 und kleiner als eine Dicke d3 der schallabsorbierenden Leichtbauplatte 1 ist. Die schallabsorbierende Leichtbauplatte 1 bildet demnach die stärkste Lage aus, denn sie erfüllt die Hauptfunktion der akustisch wirksamen Verbundplatte 10. Die strömungsoffene Lage 3 und die strömungsdichte Lage 2 erfüllen lediglich Nebenfunktionen, die jedoch die akustische Wirksamkeit der Verbundplatte 10 beeinflussen.

Die Nebenfunktion der strömungsdichten Lage 2 besteht darin, die Verbundplatte 10 rückseitig luftdicht zu schließen bzw. zu versiegeln. Die Verbundplatte 10 neigt dadurch weniger stark zu Verschmutzungen, da keine staubhaltige Luft die Verbundplatte durchströmen kann. Wird die strömungsdichte Lage 2 unmittelbar auf die schallabsorbierende Leichtbauplatte 1 aufgebracht, verschlechtert sich jedoch die akustische Wirksamkeit der Verbundplatte 10. Durch die vermittelnde strömungsoffene Lage 3 kann die strömungsdichte Lage 2 von der schallabsorbierenden Leichtbauplatte 1 entkoppelt werden, so dass der negative Einfluss der strömungsdichten Lage 4 auf die akustische Wirksamkeit aufgehoben oder zumindest deutlich verringert wird.

Der Figur 2 ist eine zweite erfindungsgemäße akustisch wirksame Verbundplatte 10 gemäß einer bevorzugten Ausführungsform zu entnehmen. Auch diese Verbundplatte 10 weist eine schallabsorbierende Leichtbauplatte 1, eine strömungsdichte Lage 2 sowie eine zwischen der schallabsorbierenden Leichtbauplatte 1 und der strömungsdichten Lage 2 vermittelnde strömungsoffene Lage 3 auf. Im Unterschied zur Ausführungsform der Figur 1 ist hier die schallabsorbierende Leichtbauplatte 1 beidseitig mit einer Kaschierung 4 versehen. Die Kaschierung 4 verbessert die Haptik und die Verarbeitungsfreundlichkeit der schallabsorbierenden Leichtbauplatte 1. Zudem bewirkt sie eine gewisse Armierung. Für die strömungsoffene Lage 3 bildet sie darüber hinaus einen guten Haftgrund aus. Im Übrigen gleicht die Verbundplatte 10 der der Figur 1.

## Patentansprüche

1. Verfahren zur Herstellung einer akustisch wirksamen Verbundplatte (10) für den Innenausbau, umfassend eine schallabsorbierende Leichtbauplatte (1) und eine strömungsdichte Lage (2),
**dadurch gekennzeichnet, dass** zwischen der schallabsorbierenden Leichtbauplatte (1) und der strömungsdichten Lage (2) eine strömungsoffene Lage (3) zur Entkopplung, insbesondere Schallentkopplung, der strömungsdichten Lage (2) von der schallabsorbierenden Leichtbauplatte (1) ausgebildet wird.

2. Verfahren nach Anspruch 1,
**dadurch gekennzeichnet, dass** zur Ausbildung der strömungsoffenen Lage (3) ein Flächengebilde, insbesondere ein Vlies, Gewebe, Gewirke oder Gelege, verwendet wird, das
a) ein Flächengewicht nach DIN EN 12127 von 140 bis 500 g/m², vorzugsweise von 160 bis 480 g/m², weiterhin vorzugsweise von 180 bis 450 g/m², und/oder
b) einen spezifischen Strömungswiderstand nach DIN EN ISO 9053-1 kleiner 500 Pa*s/m, vorzugsweise kleiner 200 Pa*s/m, weiterhin vorzugsweise kleiner 100 Pa*s/m
aufweist.

3. Verfahren nach Anspruch 1 oder 2,
**dadurch gekennzeichnet, dass** die strömungsoffene Lage (3) in einer Dicke (d1) ausgebildet wird, die größer als eine Dicke (d2) der strömungsdichten Lage ist, wobei vorzugsweise
- die Dicke (d1) nach DIN EN ISO 9073-2 mindestens 1,5 mm, weiterhin vorzugsweise mindestens 1,7 mm, besonders bevorzugt mindestens 1,9 mm und/oder
- die Dicke (d2) nach DIN EN ISO 9073-2 0,2 bis 1,2 mm, weiterhin vorzugsweise 0,3 bis 0,8 mm, besonders bevorzugt 0,4 bis 0,6 mm beträgt.

4. Verfahren nach einem der vorhergehenden Ansprüche,
**dadurch gekennzeichnet, dass** zur Ausbildung der strömungsdichten Lage (2) ein Flächengebilde verwendet wird, das
a) ein Flächengewicht nach DIN EN 12127 von 200 bis 600 g/m², vorzugsweise von 220 bis 500 g/m², weiterhin vorzugsweise von 240 bis 450 g/m², und/oder
b) einen spezifischen Strömungswiderstand nach DIN EN ISO 9053-1 über 1000 Pa*s/m, vorzugsweise über 2000 Pa*s/m, weiterhin vorzugsweise über 5000 Pa*s/m
aufweist.

5. Verfahren nach einem der vorhergehenden Ansprüche,
**dadurch gekennzeichnet, dass** die strömungsoffene Lage (3) und die strömungsdichte Lage (2) im Verbund oder nacheinander auf die schallabsorbierende Leichtbauplatte (1) aufgebracht, vorzugsweise aufgeklebt oder auflaminiert, werden.

6. Verfahren nach einem der Ansprüche 1 bis 4,
**dadurch gekennzeichnet, dass** die strömungsoffene Lage (3) und die strömungsdichte Lage (2) bereits bei der Herstellung der schallabsorbierenden Leichtbauplatte (1) mit dieser verbunden, vorzugsweise verpresst, werden.

7. Verfahren nach einem der vorhergehenden Ansprüche,
**dadurch gekennzeichnet, dass** die schallabsorbierende Leichtbauplatte (1) aus einer Zusammensetzung hergestellt wird, die mindestens einen Leichtfüllstoff und mindestens ein organisches Polymerbindemittel enthält.

8. Verfahren nach Anspruch 7,
**dadurch gekennzeichnet, dass** die schallabsorbierende Leichtbauplatte (1) aus einer Zusammensetzung hergestellt wird, die eine Leichtfüllstoffkombination aus Leichtfüllstoffen unterschiedlicher Partikelgrößenfraktionen enthält, wobei vorzugsweise die Leichtfüllstoffkombination mindestens drei Partikelgrößenfraktionen enthält, umfassend
- eine erste Fraktion (A) mit einer Partikelgröße nach DIN EN 933-1 von 0,8-2,5 mm, vorzugsweise von 0,9-2,2 mm, weiterhin vorzugsweise von 1,0-2,0 mm,
- eine zweite Fraktion (B) mit einer Partikelgröße nach DIN EN 933-1 von 0,28-1,6 mm, vorzugsweise von 0,4-1,25 mm, weiterhin vorzugsweise von 0,5-1,0 mm, und
- eine dritte Fraktion (C) mit einer Partikelgröße nach DIN EN 933-1 von 0,1-0,8 mm, vorzugsweise von 0,2-0,63 mm, weiterhin vorzugsweise von 0,25-0,5 mm.

9. Verfahren nach Anspruch 8,
**dadurch gekennzeichnet, dass** die Partikelgröße nach DIN EN 933-1 einer Fraktion (B, C) um mindestens den Faktor 0,5 kleiner als die der nächstgröberen Fraktion (A, B) ist.

10. Verfahren nach Anspruch 8 oder 9,
**dadurch gekennzeichnet, dass** die schallabsorbierende Leichtbauplatte (1) aus einer Zusammensetzung hergestellt wird, die
- 30-60 Gew.-%, vorzugsweise 32-56 Gew.-%, weiterhin vorzugsweise 34-50 Gew.-% Leichtfüllstoffe der ersten Fraktion (A),
- 20-50 Gew.-%, vorzugsweise 24-45 Gew.-%, weiterhin vorzugsweise 26-40 Gew.-% der zweiten Fraktion (B) und
- 4-16 Gew.-%, vorzugsweise 6-14 Gew.-%, weiterhin vorzugsweise 8-12 Gew.-% der dritten Fraktion (C)
jeweils bezogen auf das Gesamtgewicht der Ausgangsstoffe enthält.

11. Verfahren nach einem der Ansprüche 7 bis 10,
**dadurch gekennzeichnet, dass** die schallabsorbierende Leichtbauplatte (1) aus einer Zusammensetzung hergestellt wird, die ein Hydrophobierungsmittel, beispielsweise aus der Gruppe der Silikonharze, Polysiloxane, Fettsäuren, Fettsäurederivate, Wachse und/oder Paraffine, enthält.

12. Verfahren nach einem der Ansprüche 7 bis 11,
**dadurch gekennzeichnet, dass** die schallabsorbierende Leichtbauplatte (1) ein- oder beidseitig kaschiert wird.

13. Akustisch wirksame Verbundplatte (10) für den Innenausbau, umfassend eine schallabsorbierende Leichtbauplatte (1) und eine strömungsdichte Lage (2), **dadurch gekennzeichnet, dass** zwischen der schallabsorbierenden Leichtbauplatte (1) und der strömungsdichten Lage (2) eine strömungsoffene Lage (3) zur Entkopplung, insbesondere Schallentkopplung, der strömungsdichten Lage (2) von der schallabsorbierenden Leichtbauplatte (1) angeordnet ist.

14. Verbundplatte (10) nach Anspruch 13,
**dadurch gekennzeichnet, dass** die strömungsoffene Lage (3) aus einem Flächengebilde, insbesondere einem Vlies, Gewebe, Gewirke oder Gelege, ausgebildet ist, das
a) ein Flächengewicht nach DIN EN 12127 von 140 bis 500 g/m², vorzugsweise von 160 bis 480 g/m², weiterhin vorzugsweise von 180 bis 450 g/m², und/oder
b) einen spezifischen Strömungswiderstand nach DIN EN ISO 9053-1 kleiner 500 Pa*s/m, vorzugsweise kleiner 200 Pa*s/m, weiterhin vorzugsweise kleiner 100 Pa*s/m
aufweist.

15. Verbundplatte (10) nach Anspruch 13 oder 14,
**dadurch gekennzeichnet, dass** die strömungsdichte Lage (2) aus einem Flächengebilde ausgebildet ist, das
a) ein Flächengewicht nach DIN EN 12127 von 200 bis 600 g/m², vorzugsweise von 220 bis 500 g/m², weiterhin vorzugsweise von 240 bis 450 g/m², und/oder
b) einen spezifischen Strömungswiderstand nach DIN EN ISO 9053-1 über 1000 Pa*s/m, vorzugsweise über 2000 Pa*s/m, weiterhin vorzugsweise über 5000 Pa*s/m
aufweist.

16. Verbundplatte (10) nach einem der Ansprüche 13 bis 15,
**dadurch gekennzeichnet, dass** die strömungsoffene Lage (3) eine Dicke (d1) aufweist, die größer als eine Dicke (d2) der strömungsdichten Lage (2) ist, wobei vorzugsweise
- die Dicke (d1) nach DIN EN ISO 9073-2 mindestens 1,5 mm, weiterhin vorzugsweise mindestens 1,7 mm, besonders bevorzugt mindestens 1,9 mm und/oder
- die Dicke (d2) nach DIN EN ISO 9073-2 0,2 bis 1,2 mm, weiterhin vorzugsweise 0,3 bis 0,8 mm, besonders bevorzugt 0,4 bis 0,6 mm beträgt.

17. Verbundplatte (10) nach einem der Ansprüche 13 bis 16,
**dadurch gekennzeichnet, dass** die schallabsorbierende Leichtbauplatte (1) eine Dicke (d3) von 12 bis 35 mm, vorzugsweise von 16 bis 30 mm, weiterhin vorzugsweise von 18 bis 26 mm aufweist.

18. Verbundplatte (10) nach einem der Ansprüche 13 bis 17,
**dadurch gekennzeichnet, dass** die schallabsorbierende Leichtbauplatte (1) mindestens einen Leichtfüllstoff, vorzugsweise eine Leichtfüllstoffkombination aus Leichtfüllstoffen unterschiedlicher Partikelgrößenfraktionen, sowie mindestens ein organisches Polymerbindemittel enthält.

## Geänderte Patentansprüche

### Geänderte Patentansprüche gemäss Regel 137(2) EPÜ.

1. Verfahren zur Herstellung einer akustisch wirksamen Verbundplatte (10) für den Innenausbau, umfassend eine schallabsorbierende Leichtbauplatte (1) und eine strömungsdichte Lage (2),
wobei zwischen der schallabsorbierenden Leichtbauplatte (1) und der strömungsdichten Lage (2) eine strömungsoffene Lage (3) zur Entkopplung, insbesondere Schallentkopplung, der strömungsdichten Lage (2) von der schallabsorbierenden Leichtbauplatte (1) ausgebildet wird,
wobei zur Ausbildung der strömungsoffenen Lage (3) ein Flächengebilde, insbesondere ein Vlies, Gewebe, Gewirke oder Gelege, verwendet wird, das einen spezifischen Strömungswiderstand nach DIN EN ISO 9053-1 kleiner 500 Pa*s/m, vorzugsweise kleiner 200 Pa*s/m, weiterhin vorzugsweise kleiner 100 Pa*s/m, aufweist,
wobei zur Ausbildung der strömungsdichten Lage (2) ein Flächengebilde verwendet wird, das einen spezifischen Strömungswiderstand nach DIN EN ISO 9053-1 über 1000 Pa*s/m, vorzugsweise über 2000 Pa*s/m, weiterhin vorzugsweise über 5000 Pa*s/m aufweist,
und wobei die schallabsorbierende Leichtbauplatte (1) aus einer Zusammensetzung hergestellt wird, die mindestens einen Leichtfüllstoff und mindestens ein organisches Polymerbindemittel enthält.

2. Verfahren nach Anspruch 1,
**dadurch gekennzeichnet, dass** zur Ausbildung der strömungsoffenen Lage (3) ein Flächengebilde, insbesondere ein Vlies, Gewebe, Gewirke oder Gelege, verwendet wird, das ein Flächengewicht nach DIN EN 12127 von 140 bis 500 g/m², vorzugsweise von 160 bis 480 g/m², weiterhin vorzugsweise von 180 bis 450 g/m², aufweist.

3. Verfahren nach Anspruch 1 oder 2,
**dadurch gekennzeichnet, dass** die strömungsoffene Lage (3) in einer Dicke (d1) ausgebildet wird, die größer als eine Dicke (d2) der strömungsdichten Lage ist, wobei vorzugsweise
- die Dicke (d1) nach DIN EN ISO 9073-2 mindestens 1,5 mm, weiterhin vorzugsweise mindestens 1,7 mm, besonders bevorzugt mindestens 1,9 mm und/oder
- die Dicke (d2) nach DIN EN ISO 9073-2 0,2 bis 1,2 mm, weiterhin vorzugsweise 0,3 bis 0,8 mm, besonders bevorzugt 0,4 bis 0,6 mm beträgt.

4. Verfahren nach einem der vorhergehenden Ansprüche,
**dadurch gekennzeichnet, dass** zur Ausbildung der strömungsdichten Lage (2) ein Flächengebilde verwendet wird, das ein Flächengewicht nach DIN EN 12127 von 200 bis 600 g/m², vorzugsweise von 220 bis 500 g/m², weiterhin vorzugsweise von 240 bis 450 g/m², aufweist.

5. Verfahren nach einem der vorhergehenden Ansprüche,
**dadurch gekennzeichnet, dass** die strömungsoffene Lage (3) und die strömungsdichte Lage (2) im Verbund oder nacheinander auf die schallabsorbierende Leichtbauplatte (1) aufgebracht, vorzugsweise aufgeklebt oder auflaminiert, werden.

6. Verfahren nach einem der Ansprüche 1 bis 4,
**dadurch gekennzeichnet, dass** die strömungsoffene Lage (3) und die strömungsdichte Lage (2) bereits bei der Herstellung der schallabsorbierenden Leichtbauplatte (1) mit dieser verbunden, vorzugsweise verpresst, werden.

7. Verfahren nach einem der vorhergehenden Ansprüche,
**dadurch gekennzeichnet, dass** die schallabsorbierende Leichtbauplatte (1) aus einer Zusammensetzung hergestellt wird, die eine Leichtfiillstoffkombination aus Leichtfüllstoffen unterschiedlicher Partikelgrößenfraktionen enthält, wobei vorzugsweise die Leichtfüllstoffkombination mindestens drei Partikelgrößenfraktionen enthält, umfassend
- eine erste Fraktion (A) mit einer Partikelgröße nach DIN EN 933-1 von 0,8-2,5 mm, vorzugsweise von 0,9-2,2 mm, weiterhin vorzugsweise von 1,0-2,0 mm,
- eine zweite Fraktion (B) mit einer Partikelgröße nach DIN EN 933-1 von 0,28-1,6 mm, vorzugsweise von 0,4-1,25 mm, weiterhin vorzugsweise von 0,5-1,0 mm, und
- eine dritte Fraktion (C) mit einer Partikelgröße nach DIN EN 933-1 von 0,1-0,8 mm, vorzugsweise von 0,2-0,63 mm, weiterhin vorzugsweise von 0,25-0,5 mm.

8. Verfahren nach Anspruch 7,
**dadurch gekennzeichnet, dass** die Partikelgröße nach DIN EN 933-1 einer Fraktion (B, C) um mindestens den Faktor 0,5 kleiner als die der nächstgröberen Fraktion (A, B) ist.

9. Verfahren nach Anspruch 7 oder 8,
**dadurch gekennzeichnet, dass** die schallabsorbierende Leichtbauplatte (1) aus einer Zusammensetzung hergestellt wird, die
- 30-60 Gew.-%, vorzugsweise 32-56 Gew.-%, weiterhin vorzugsweise 34-50 Gew.-% Leichtfüllstoffe der ersten Fraktion (A),
- 20-50 Gew.-%, vorzugsweise 24-45 Gew.-%, weiterhin vorzugsweise 26-40 Gew.-% der zweiten Fraktion (B) und
- 4-16 Gew.-%, vorzugsweise 6-14 Gew.-%, weiterhin vorzugsweise 8-12 Gew.-% der dritten Fraktion (C)
jeweils bezogen auf das Gesamtgewicht der Ausgangsstoffe enthält.

10. Verfahren nach einem der vorhergehenden Ansprüche,
**dadurch gekennzeichnet, dass** die schallabsorbierende Leichtbauplatte (1) aus einer Zusammensetzung hergestellt wird, die ein Hydrophobierungsmittel, beispielsweise aus der Gruppe der Silikonharze, Polysiloxane, Fettsäuren, Fettsäurederivate, Wachse und/oder Paraffine, enthält.

11. Verfahren nach einem der vorhergehenden Ansprüche,
**dadurch gekennzeichnet, dass** die schallabsorbierende Leichtbauplatte (1) ein- oder beidseitig kaschiert wird.

12. Akustisch wirksame Verbundplatte (10) für den Innenausbau, umfassend eine schallabsorbierende Leichtbauplatte (1) und eine strömungsdichte Lage (2), wobei zwischen der schallabsorbierenden Leichtbauplatte (1) und der strömungsdichten Lage (2) eine strömungsoffene Lage (3) zur Entkopplung, insbesondere Schallentkopplung, der strömungsdichten Lage (2) von der schallabsorbierenden Leichtbauplatte (1) angeordnet ist,
wobei die strömungsoffene Lage (3) aus einem Flächengebilde, insbesondere einem Vlies, Gewebe, Gewirke oder Gelege, ausgebildet ist, das einen spezifischen Strömungswiderstand nach DIN EN ISO 9053-1 kleiner 500 Pa*s/m, vorzugsweise kleiner 200 Pa*s/m, weiterhin vorzugsweise kleiner 100 Pa*s/m, aufweist,
wobei die strömungsdichte Lage (2) aus einem Flächengebilde ausgebildet ist, das einen spezifischen Strömungswiderstand nach DIN EN ISO 9053-1 über 1000 Pa*s/m, vorzugsweise über 2000 Pa*s/m, weiterhin vorzugsweise über 5000 Pa*s/m, aufweist,
und wobei die schallabsorbierende Leichtbauplatte (1) mindestens einen Leichtfüllstoff, vorzugsweise eine Leichtfüllstoffkombination aus Leichtfüllstoffen unterschiedlicher Partikelgrößenfraktionen, sowie mindestens ein organisches Polymerbindemittel enthält.

13. Verbundplatte (10) nach Anspruch 12,
**dadurch gekennzeichnet, dass** die strömungsoffene Lage (3) aus einem Flächengebilde, insbesondere einem Vlies, Gewebe, Gewirke oder Gelege, ausgebildet ist, das ein Flächengewicht nach DIN EN 12127 von 140 bis 500 g/m², vorzugsweise von 160 bis 480 g/m², weiterhin vorzugsweise von 180 bis 450 g/m²aufweist.

14. Verbundplatte (10) nach Anspruch 12 oder 13,
**dadurch gekennzeichnet, dass** die strömungsdichte Lage (2) aus einem Flächengebilde ausgebildet ist, das ein Flächengewicht nach DIN EN 12127 von 200 bis 600 g/m², vorzugsweise von 220 bis 500 g/m², weiterhin vorzugsweise von 240 bis 450 g/m²aufweist.

15. Verbundplatte (10) nach einem der Ansprüche 12 bis 14,
**dadurch gekennzeichnet, dass** die strömungsoffene Lage (3) eine Dicke (d1) aufweist, die größer als eine Dicke (d2) der strömungsdichten Lage (2) ist, wobei vorzugsweise
- die Dicke (d1) nach DIN EN ISO 9073-2 mindestens 1,5 mm, weiterhin vorzugsweise mindestens 1,7 mm, besonders bevorzugt mindestens 1,9 mm und/oder
- die Dicke (d2) nach DIN EN ISO 9073-2 0,2 bis 1,2 mm, weiterhin vorzugsweise 0,3 bis 0,8 mm, besonders bevorzugt 0,4 bis 0,6 mm beträgt.

16. Verbundplatte (10) nach einem der Ansprüche 12 bis 15,
**dadurch gekennzeichnet, dass** die schallabsorbierende Leichtbauplatte (1) eine Dicke (d3) von 12 bis 35 mm, vorzugsweise von 16 bis 30 mm, weiterhin vorzugsweise von 18 bis 26 mm aufweist.
